Europäisches Patentamt

European Patent Office

Office européen des brevets

(11) Publication number: **0 229 423 B1**

# EUROPEAN PATENT SPECIFICATION

(45) Date of publication of patent specification: **11.03.92** (51) Int. Cl.5: **G05B 19/417**

(21) Application number: **86202308.2**

(22) Date of filing: **17.12.86**

(54) **Control arrangement for a transport system.**

(30) Priority: **23.12.85 NL 8503543**

(43) Date of publication of application:
**22.07.87 Bulletin 87/30**

(45) Publication of the grant of the patent:
**11.03.92 Bulletin 92/11**

(84) Designated Contracting States:
**AT BE CH DE FR GB IT LI NL SE**

(56) References cited:
**DE-A- 2 435 622**
**US-A- 4 309 600**
**US-A- 4 355 391**
**US-A- 4 377 890**

(73) Proprietor: **N.V. Philips' Gloeilampenfabrieken
Groenewoudseweg 1
NL-5621 BA Eindhoven(NL)**

(72) Inventor: **Biemans, Franciscus Petrus Maria
c/o Int. Octrooibureau B.V. Prof. Holstlaan 6
NL-5656 AA Eindhoven(NL)**

(74) Representative: **De Jongh, Cornelis
Dominicus et al
INTERNATIONAAL OCTROOIBUREAU B.V.
Prof. Holstlaan 6
NL-5656 AA Eindhoven(NL)**

## Description

The invention relates to an arrangement for controlling a transport system comprising work stations (A,D) and transport stations (B,C) in which transport system products are guided along a conveyor arrangement (10) in a product independent manner along one or a plurality of transport stations (B,C), the products being accommodated to carry information labels with messages and the products and their associated labels being carried by the conveyor arrangement (10) to a next transport station (B,C), in which transport system the work stations (A,D) can communicate with each other through a data communication channel (20) and in which transport system each transport station (B,C) comprises a product label communication channel (21,22,23,24,25) via which the messages are transmitted.

Such an arrangement is known from US-A-4,309,600.

Product manufacturing is currently required to be very flexible. Flexible in that sense that the tasks of the work stations (for example robots) can easily be modified to manufacture a slightly different or an entirely different product. Apart from the flexibility of the stations as such, however, the system itself as a combination of work and transport stations and transport systems should be flexible too.

Recent years have shown the development of a great variety of more or less automated subsystems. If, however, a robot should be linked to a transport systems or to a production planning system, its integration is not always easy to realize. This is caused among others by the fact that the subsystems do not have a common information exchange procedure or, put in more general terms, there is no harmony in the way of responding to each other's information signals. Consequently, a manufacturing system is built up of a number of "islands of automation". This leads to the fact that some systems remain dependent on human intervention (for example the operator of a numerically controlled machine-tool. In other so-called supervisory systems for robots this leads to changing the supervisory system as well if the robot has to be exchanged by a robot of a different type.

In addition, the tasks required to control production have not been clearly defined and distinguished from each other in these and similar cases, making the relation pattern between the subsystems more intricate than is really necessary.

The invention has for its object to provide an arrangement for controlling a transport system which does not have the aforesaid drawbacks and, more specifically, which allows changes in individual subsystems with minimum consequences to the system as a whole.

The arrangement for controlling the transport system of the type mentioned in the opening paragraph is characterized in that each work station (A,D) comprises at least a work station control arrangement (19A,19D) and a pick up and transfer arrangement (15A,15D), in that at least one work station (A,D) further comprises a routing arrangement (17A,17D) and a product guide arrangement (16A,16D), in that each transport station (B,C) comprises at least a pick up and transfer arrangement (15B,15C) and in that at least one transport station further comprises a routing arrangement (17C) and a product guide arrangement (16B,16C); the control-, pick up and transfer-, product guide- and routing arrangement having mutual hierarchical levels with the control arrangements (19A,19D) having the highest hierarchical level, with the routing arrangements (17A,17C,17D) having the second highest hierarchical level, with the product guide arrangements (16A,16B,16C,16D) having the third highest hierarchical level and with the pick up and transfer arrangements (15A,15B,15C,15D) having the lowest hierarchical level; the work stations (A,D) being interconnected via the data communication channel (20) between the control arrangements (19A,19D); the routing arrangements (17A,17C,17D) being interconnected via another data communication channel (26) for exchanging messages relating to the product routing; the product guide arrangements (16A,16B,16C,16D) being interconnected via a further data communication channel (27) for exchanging messages relating to product sequence and congestion; arrangements (15A,16A,17A,19A; 15B,16B; 15C,16C,17C; 15D,16D,17D,18D) belonging to one work/transport station (A,B,C,D) being interlinked via the product label communication channel (21,22,23,24,25) with pick up and transfer arrangements (15A,15B,15C,15D) being accommodated to inscribe and to read the messages on the labels of the products.

With work stations comprising two or more separate arrangements and transport stations comprising one or more separate arrangements, the arrangements of a station being interlinked and the corresponding arrangements of different stations being interconnected, the transport system, becomes very flexibel, and the tasks required to control production are clearly defined.

The invention will now be further explained with reference to the accompanying drawings whilst the components indicated by the same symbols in the drawings are identical and in which:

Fig. 1 shows a block diagram of a transport system control in accordance with the invention;

Fig. 2 shows a top elevation of (part of) a section of a conveyor arrangement;

Fig. 3 shows a block diagram of a product label communication channel to be incorporated in the transport system in accordance with fig. 1;

Fig. 4 shows a diagrammatic representation of the communication flows in a transport system in accordance with fig. 1.

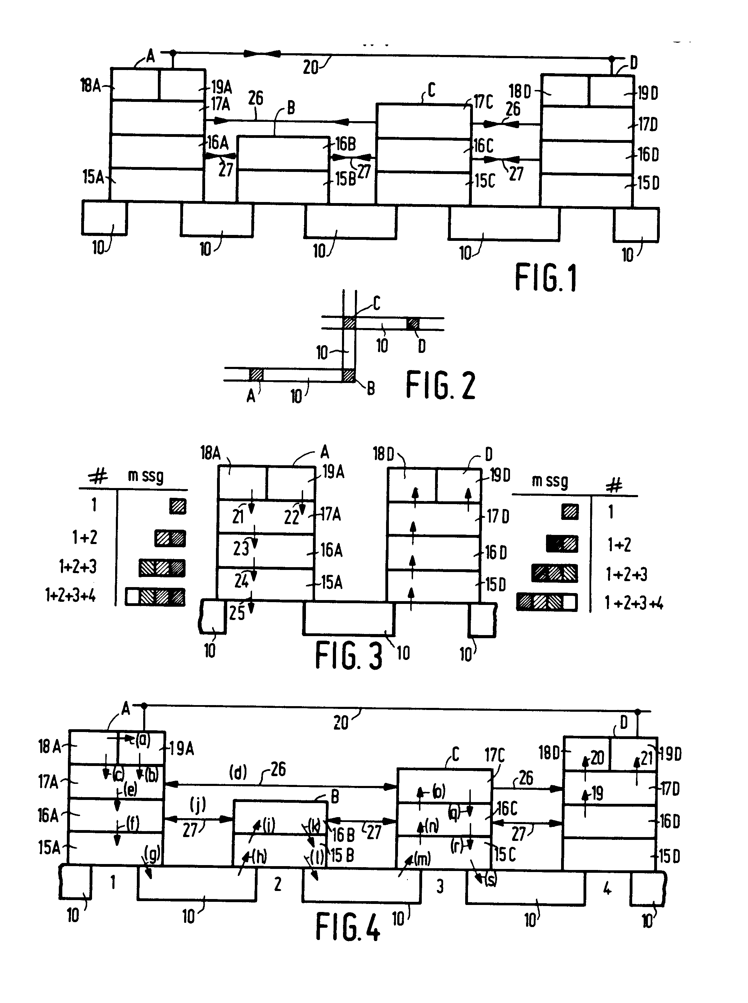

Fig. 1 is a functional representation of part of an internal transport and manufacturing system. Products (not shown) preferably but not recessarily on product carriers are guided over the conveyor arrangement 10 (e.g. a conveyor belt) via a route still to be defined. Near the conveyor arrangement 10 a number of work stations e.g. A, D are placed for processing and routing the products and controlling product transfers. By processing is meant the whole range of mounting (screwing, cementing, soldering, and so on), machining,measuring, adjusting, storing, and so on. The conveyor (for example a chute with a conveyor belt) will generally have a lay-out which is adjusted to the operations the product has to undergo. A lay-out as shown in the top elevation of fig. 2 is taken as an example for the further description. In addition, a number of transport stations e.g. B, C have been erected near the conveyor 10 which have to control the mechanical part of the transport system such that products are transferred from one work station to the other. The work stations A, D are usually designed such that these functions too can be carried out by them in an identical manner.

To this end workstations A, D and transport stations B, C are composed of the same parts, provided however, that all transport stations need not be fully completed. All transport stations comprise at least a pick-up and transfer arrangement 15.

The pick-up and transfer arrangement 15 has to signal that a product has arrived, read possible data on (a label on) a product and generate forces which when transmitted to a product bring the product into the desired position or subject it to the desired shift in the right direction. The pick-up and transfer arrangements can cause "standard shifts", that is to say the most primitive (indivisible) shifts that can be realised. Practical examples of similar standard shifts are lifting, rotating and translating.

The standard shifts are controlled by the product guide arrangements 16. Each product is subjected to a series of one or more standard shifts for the purpose of moving a product from one node in the transport system the next node. A node is a spot in the transport system where a product can be moved into more than one direction, and/or where a product can be stopped as it has reached its destination or because other products have right of way.

As the product guide arrangements 16 can individually control the standard shifts, the geograpbical distribution of the products on the conveyor arrangement 10 can be controlled and product congestion at certain sections or product collisions can be avoided.

In addition, the product guide arrangements 16 can be charged with checking whether the sequence of products transported between two nodes is maintained. This sequence could be disturbed by accidental or illegal removal of products from the transport system. A possible way of checking this is assigning sequence numbers to products and checking whether the products and the covering numbers together arrive in sequence.

The product transfer between two nodes is indeed a necessary function, though not the only function generally speaking. It may be necessary for a product to visit work stations that have not all and in the right sequence been linked to a transport system without branches (giving rise to alternative routes).

To cope with problems like these several stations (A, C, D) have been provided with a routing arrangement 17. Further details of the routing arrangement 17 will be disclosed hereinafter.

The work stations A, D also comprise a processing arrangement 18 (the work station in a narrower sense) and a control 19 thereof. The processing arrangements 18 carry out operations (called processes) modifying the geometrical. chemical or physical state of the products or carry out operations such as measuring or storing the products. The products are "offered" to the processing arrangement via routing arrangement 17 and after the process has ended "transferred" again to the routing arrangement for further transport.

The control 19 of the processing arrangements 18 decides which operation(s) the processing arrangement should carry out and at which point of time it should be done. To carry out this task in a flexible manner it is essential that the controls 19 should be able to communicate with each other. To this end all controls have been linked to a data communication channel 20, which, for example, forms part of a so-called known persse local area network. Thus a control 19 of a certain processing arrangement 18 can order another control 19 to supply certain products. Besides, the controls 19 can also exchange messages in view of obtaining orders for their processing arrangements. Then again messages can be exchanged relating to product data, test reports, and so on.

The internal transport system is not only equipped with an electronic communication means via communication system 20, 26 and 27,but also with a physical communication system, for example, by attaching imprintable labels to the products. For example the information on the label can be laid down in a bar code or in a magnetic strip.

Basically both pick-up and transfer arrangement 15, the product guide arrangements 16 and the routing arrangements 17 can use this physical communication system. Besides, processing arrangement 18 plus control arrangement 19 can also make use of the physical communication system. If all arrangements make use of the physical communication system the procedure is as follows (fig. 3).

Processing arrangement 18A transmits certain product information (21) (for example test data) to the routing arrangement 17A, whilst control arrangement 19 specifies to the routing arrangement the address (22) to which the product should be transported. Subsequently, the routing arrangements determine the complete or partial route along which the specific product is to be taken through the transport system and adds a route description to the data from the processing arrangement and control (21, 22).

These data are transferred to the product guide arrangement 16A which may decide to append its own control information, for example a sequence number for the products, to check whether the products arrive in sequence. The string of data (24) expanded in this manner is transferred to the pick-up and control arrangement 15A. The latter can also add its own information such as for example redundant data for error recognition and error recovery. Subsequently, the entire information string (25) is transferred to the product by the pick-up and transfer arrangement in some form or other. Then the product is transported via conveyor arrangement 10, and the next pick-up and transfer arrangement "visited" by the product (15D) will read out the information carried along, after which - in reverse order - each arrangement removes the relevant data portion from the string.

In some cases it is advantageous for the routing arrangements too (just like the control of the processing arrangement) to have a second, electronic communication channel. In that case the routing arrangements 17A, 17C and 17D (fig. 1) are connected to a communication channel 26. Via the communication channel 26 the routing arrangements 17 exchange messages, for example to determine the optimal route of each product through the transport system considering the load factor of the stations and the availability of routes and alternative routes.

Summarising it can be stated that the internal transport system can optionally dispose of the following communication means:

(a) an (electronic) communication channel (20) between the controls 19 of the processing arrangements 18 of the stations involved (A, D);

(b) an (electronic) communication channel (26) between the routing arrangements 17 of the stations involved (A, C, D);

(c) an (electronic) communication channel (27) between the product guide arrangements (16) of the stations involved (A, B, C, D);

(d) a product label communication channel (21, 22, 23, 24, 25 in fig. 3) to transfer the data which are transported together with the product; and

(e) a physical communication channel (10) where the information is attached to the product and taken to its destination(s) via the conveyor arrangement (10).

The application of these means of communication and the information streams will now further be illucidated by means of fig. 4. In this figure work station A is depicted as a measuring station whilst work station B represents a repair station. The arrows in fig. 4 indicate the direction in which the information is transported whilst the added letter refers to the explanatory notes given hereinafter.

(a). The processing arrangement 18A informs the control 19A that the product has gone through the process. In addition, work station A (which is a test station) states that the test result is negative (message 1) ;

(b) The control 19A informs to the routing arrangement to which address (for example work station) the product is to be taken. Let us assume that the product should be taken to the repair station D. For example on a magnetic label which is affixed to the product the test result of the product will be stated.

(c) The process arrangement transfers the control of the product and its label to the routing arrangement 17 for further completion. On the basis of the received address the routing arrangement then determines the route along which the product and its label can be transported to the given address.

(d) To this end the routing arrangement 17A can exchange messages with other routing arrangements 17C, 17D for determining the optimal route. For example, routing arrangement 17A reports to routing arrangement 17C which products it has sent to station C. Routing arrangement 17C will report back which products it has received. Thus routing arrangement 17A can determine how many products are present on the conveyor arrangement 10 between stations A and C. Let us assume that the routing arrangement determines that the product should be transported via station 3 to station 4. The message generated by the routing arrangement is for example: "product number X, transport to D via C" (message 2) .

(e) The routing arrangement 17A transmits to the product guide arrangement 16A the entire message (the messages 1 and 2).

A function of the product guide arrangement 16A is for example to give the product a sequence number (message 3). If the product guide arrangement 16B transmits the sequence numbers via communication channel 27 to product guide arrangement 16A the latter can ascertain if all products have timely arrived at 16B and their sequence. In case of congestion product guide arrangement 16A can stop the transport of further products to station B (or C).

(f) The product guide arrangement 16A orders the pick-up and transfer arrangement 15 to transport the product and the messages 1, 2 and 3 to station B. The pick-up and transfer arrangement then takes for example error protection measures. For example redundant information is added to the message (message 4) enabling writing or reading errors of the label to be detected or even corrected.

(g) The product carrying the messages 1 to 4 are transported via conveyor arrangement 10. This implies that not until a writing facility comprised in the pick-up and transfer arrangement 15 has written all messages onto the label (for example magnetic label) will the product including the inscribed label be transferred.

(h) The product and label arrive at the pick-up and transfer arrangement 15B where for example via a proximity detector and a reading facility this label is read. The arrangement 15B checks the data on the label and possibly corrects them whilst making use of the redundancy .

(i) The relevant data from the received message are transferred to the product guide arrangement 16B. Especially message 3 relating to the sequence numbers is important to the product guide arrangement 16B.

(j) The product guide arrangement 16B transmits a message through the data communication channel to product guide arrangement 16A, stating the arrival of the product, thus informing product guide arrangement 16A that the transport from A to B has been carried out without errors. Now the product has to be transferred to station C. Product guide arrangement 16B known from messages over a data communication channel that the transport system between stations B and C is funtioning properly and the product can be transferred to station C with for example the same sequence numbers (message 3). This procedure is further adopted until the product finally reaches station D and the messages 1 to 4 are transferred to the arrangements involved 15D, 16D, 17D, 18D and 19D.

In Figs. 1, 3 and 4 the control arrangements 19 are represented in a distributed set up. However, this is not essential: a central control arrangement giving access to all process arrangements 18 can likewise be used. When the processing arrangements have access to the central control arrangement, data communication will then be necessary between the processing arrangement and the central control arrangement.

The control arrangement for the transport system offers the following advantages:

- open-endedness: the control allows the transport system to be increased or reduced.
- on-line change: the control allows the lay-out of the transport system to be changed, the rest of the transport system remaining operational.
- error-tolerance: parts of a transport system may break down or be repaired without the entire transport system breaking down and large portions of the production standing still.
- conveniently arranged, structured and hence, easy-to-maintain control programs.
- standardisation of large parts of the control system as a result of which, for example, a large part of the control is maintained at the moment when, for example, another mechanical sub-system of the transport system is opted for.

**Claims**

1. An arrangement for controlling a transport system comprising work stations (A,D) and transport stations (B,C) in which transport system products are guided along a conveyor arrangement (10) in a product independent manner along one or a plurality of transport stations (B,C), the products being accommodated to carry information labels with messages and the products and their associated labels being carried by the conveyor arrangement (10) to a next transport station (B,C), in which transport system the work stations (A,D) can communicate with each other through a data communication channel (20) and in which transport system each transport station (B,C) comprises a product label communication channel (21,22,23,24,25) via which the messages are transmitted, characterized in that each work station (A,D) comprises at least a work station control arrangement (19A,19D) and a pick up and transfer arrangement (15A,15D), in that at least one work station (A,D) further comprises a routing arrangement (17A,17D) and a product guide arrangement (16A,16D), in that each transport station (B,C) comprises at least a pick up and transfer arrangement (15B,15C) and in that at least one transport station further comprises a routing arrangement (17C) and a product guide arrangement (16B,16C); the control-, pick up and transfer-, product guide- and routing arrangement having mutual hierarchical levels with the control arrangements (19A,19D) having the highest hierarchical level, with the routing arrangements (17A,17C,17D) having the second highest hierarchical level, with the product guide arrangements (16A,16B,16C,16D) having the third highest hierarchical level and with the pick up and transfer arrangements (15A,15B,15C,15D) having the lowest hierarchical level; the work stations (A,D) being interconnected via the data communication channel (20) between the control arrangements (19A,19D); the routing arrangements (17A,17C,17D) being interconnected via another data communication channel (26) for exchanging messages relating to the product routing; the product guide arrangements (16A,16B,16C,16D) being interconnected via a further data communication channel (27) for exchanging messages relating to product sequence and congestion; arrangements (15A,16A,17A,19A; 15B,16B; 15C,16C,17C; 15D,16D,17D,18D) belonging to one work/transport station (A,B,C,D) being interlinked via the product label communication channel (21,22,23,24,25) with pick up and transfer arrangements (15A,15B,15C,15D) being accommodated to inscribe and to read the messages on the labels of the products.

2. A control arrangement for a transport system as claimed in Claim 1, characterized in that the pick up arrangements (15A,15B,15C,15D) encode the information on the product labels by means of an error detecting and/or correcting code.

**Revendications**

1. Dispositif de commande d'un système de transport comportant des postes de travail (A, D) et des postes de transport (B, C), système de transport dans lequel des produits sont guidés le long d'un dispositif transporteur (10) indépendamment du produit le long d'un ou plusieurs postes de transport (B, C), les produits étant adaptés pour porter des étiquettes d'information munies de messages et les produits et leurs étiquettes associées étant amenés par le dispositif transporteur (10) vers un poste de transport suivant (B, C), système de transport dans lequel les postes de travail (A, D) peuvent communiquer entre eux par un canal de communication de données (20) et chaque poste de transport (B, C) dans ce système de transport comportant un canal de communication d'étiquette de produit (21, 22, 23, 24, 25) par lequel sont transmis les messages, caractérisé en ce que chaque poste de travail (A, D) comporte au moins un dispositif de commande de poste de travail (19A, 19D) et un dispositif de saisie et de transfert (15A, 15D), en ce qu'au moins un poste de travail (A, D) comporte en outre un dispositif d'acheminement (17A, 17D) et un dispositif de guidage de produits (16A, 16D), en ce que chaque poste de transport (B, C) comporte au moins un dispositif de saisie et de transfert (15B, 15C) et en ce qu'au moins un poste de transport comporte en outre un dispositif d'acheminement (17C) et un dispositif de guidage de produits (16B, 16C); les dispositifs de commande, de saisie et de transfert, de guidage et d'acheminement de produit ayant des niveaux réciproquement hiérarchiques, les dispositifs de commande (19A, 19D) ayant le niveau hiérarchique le plus élevé, les dispositifs d'acheminement (17A, 17C, 17D) ayant le deuxième niveau hiérarchique le plus élevé, les dispositifs de guidage de produits (16A, 16B, 16C, 16D) ayant le troisième niveau hiérarchique le plus élevé et les dispositifs de saisie et de transfert (15A, 15B, 15C, 15D) ayant le niveau hiérarchique le plus bas; les postes de travail (A, D) étant reliés entre eux par le canal de communication de données (20) situé entre les dispositifs de commande (19A, 19D); les dispositifs d'acheminement (17A, 17C, 17D) étant reliés entre eux par l'intermédiaire d'un autre canal de communication de données (26) pour échanger des messages concernant l'acheminement de produits; les dispositifs de guidage de produits (16A, 16B, 16C, 16D) étant reliés entre eux par l'intermédiaire d'un autre canal de communication de données (27) pour échanger des messages concernant l'ordre de succession des produits et leur encombrement de transport; les dispositifs (15A, 16A, 17A, 19A; 15B, 16B; 15C, 16C, 17C; 15D, 16D, 17D, 18D) appartenant à un poste de travail/de transport (A, B, C, D) étant reliés entre eux par le canal de communication d'étiquette de produit (21, 22, 23, 24, 25), des dispositifs de saisie et de transfert (15A, 15B, 15C, 15D) étant prévus pour écrire et lire les messages sur les étiquettes des produits.

2. Dispositif de commande pour un système de transport selon la revendication 1, caractérisé en ce que les dispositifs de saisie (15A, 15B, 15C, 15D) encodent l'information sur les étiquettes de produit au moyen d'un code de détection d'erreurs et/ou de correction.

**Patentansprüche**

1. Schaltungsanordnung zur Steuerung eines Transportsystems mit Arbeitsstationen (A,D) und Transportstationen (B,C), wobei in diesem Transportsystem Erzeugnisse über eine Transportvorrichtung (10) in einer produktunabhängigen Art und Weise an einer oder einer Anzahl Transportstationen (B,C) entlang geführt werden, wobei die Erzeugnisse Informationsplatten mit Informationen aufweisen können und wobei die Erzeugnisse sowie die dazugehörigen Informationsplatten von der Transportvorrichtung (10) zu einer nächsten Transportstation (B,C) getragen werden, wobei bei diesem Transportsystem die Arbeitsstationen (A,D) über einen Datenkommunikationskanal (20) miteinander kommunizieren können und wobei in diesem Transportsystem jede Transportstation (B,C) einen Produktinformationskommunikationskanal (21,22,23,24,25) aufweist, über den die Informationen übertragen werden, dadurch gekennzeichnet, daß jede Arbeitsstation (A,D) mindestens eine Arbeitsstationsteueranordnung (19A,19D) sowie eine Aufnahme-und-Verschiebevorrichtung (15A,15D) aufweisen, daß mindestens eine Arbeitsstation (A,D) weiterhin eine Leitanordnung (17A,17D) und eine Produktführungseinrichtung (16A,16D), daß jede Transportstation (B,C) mindestens eine Aufnahme-und-Verschiebevorrichtung (15B,15C) aufweist und daß mindestens eine Transportstation weiterhin eine Leitanordnung (17C) und eine Produktführungseinrichtung (16B,16C) aufweist, wobei die Steuer-, Aufnahme-und-Verschiebe-, Produktführungs- und Leitanordnung unterschiedliche hierarchische Pegel aufweisen, von denen die Steueranordnungen (19A,19D) den höchsten hierarchischen Pegel haben, die Leitanordnungen (17A,17c,17D) den zweithöchsten hierarchischen Pegel und die Produkführungsvorrichtungen (16A,16B,16C,16D) den dritthöchsten hierarchischen Pegel und die Aufnahme-und-Verschiebevorrichtungen (15A,15B,15C,15D) den niedrigsten hierarchischen Pegel haben; wobei die Arbeitsstationen (A,D) über den Datenkommunikationskanal (20) zwischen den Steueranordnungen (19A,19D) miteinander verbunden sind; wobei die Leitanordnungen (17A,17C,17D) über einen anderen Kommunikationskanal (26) zum Austauschen von Nachrichten in bezug auf die Produktleitung miteinander verbunden sind; wobei die Produkführungsvorrichtungen (16A,16B,16C,16D) über einen weiteren Kommunikationskanal (27) zum Austauschen von Nachrichten in bezug auf Produktfolge und -verstopfung miteinander verbunden sind; wobei die einer Arbeits-/Transportstation (A,B,C,D) zugeordneten Anordnungen (15A,16A,17A,19A;15B,16B;15C,16C,17C;15D,-16D,17D,18D) über den Produktbezeichnungskommunikationskanal (21,22,23,24,25) miteinander verbunden sind, wobei Aufnahme-und-Verschiebevorrichtungen (15A,15B ,15C,15D) dazu eingerichtet sind, die Nachrichten auf der Kennplatte der Produkte einzuschreiben und zu lesen.

2. Steueranordnung für ein Transportsystem nach Anspruch 1, dadurch gekennzeichnet, daß die Aufnahmevorrichtungen (15A, 15B, 15C, 15D) mittels eines Fehlerdetektions- und/oder -korrekturkodes die Information auf den Kennplatten der Erzeugnisse kodieren.

FIG.1

FIG.2

FIG.3

FIG.4